# EUROPEAN PATENT SPECIFICATION

(11) **EP 4 279 782 B1**
(45) Date of publication and mention of the grant of the patent: **11.11.2026**
(21) Application number: 23191341.9
(22) Date of filing: 11.10.2017
(51) Int. Cl.: F16K 39/04, E03B 7/00, F16K 3/00, F16K 3/02, F16K 39/00, F16K 39/06, F16K 3/12, F16K 3/32, F16K 27/04, B22C 9/24, B22D 25/02, F16L 23/032

(54) **VALVE BODY WITH INTEGRAL BYPASS**
VENTILKÖRPER MIT INTEGRIERTEM BYPASS
CORPS DE SOUPAPE AVEC DÉRIVATION INTÉGRÉE

(30) Priority: 08.11.2016 US 201615346047
(43) Date of publication of application: 22.11.2023
(62) Document number(s) of the earlier application(s) in accordance with Art. 76 EPC: 23157410.4 / 4 202 274; 17869657.1 / 3 538 801
(73) Proprietor: Mueller International, LLC, Atlanta, GA 30328 (US)
(72) Inventor: SUTTERFIELD, Matthew Thomas, Signal Mountain, 37377 (US); BROGGI, Michael Louis, Chattanooga, 37405 (US); BRADLEY, Jason White, Soddy Daisy, 37379 (US)
(74) Representative: Page White Farrer

(56) References cited:
- GB-A- 2 307 718
- US-A- 1 067 011
- US-A- 5 099 437
- US-A1- 2009 025 798
- US-A1- 2010 116 359
- ASME: "Pipe Flanges and Flanged Fittings NPS 1 / 2 Through NPS 24 Metric/Inch Standard", 30 June 2009 (2009-06-30), Three Park Avenue, New York, NY 10016-5990, pages 1 - 238, XP093043174, Retrieved from the Internet <URL:https://www.asme.org> [retrieved on 20230504]

## Description

### TECHNICAL FIELD

This disclosure relates to valves. More specifically, this disclosure relates to a valve body with an integrated bypass.

### BACKGROUND

Valves in high-pressure piping systems can comprise a bypass. When a closed valve is subjected to a high pressure differential, a large unbalanced force acts on a valve member of the valve, such as a gate. The unbalanced force can make the valve difficult to open due to the friction acting on the valve member. The effect can be exacerbated as the cross-sectional area of the valve bore and the pressure differential increase. Large-diameter valves can comprise a smaller bypass which can be opened to allow the pressure to equalize on either side of the larger valve, thereby alleviating the unbalanced force. It can be desirable for the large-diameter valve to have the bypass attached to the primary valve body portion, such as in applications where space and equipment clearance are limited. However, typical bypasses can be difficult and expensive to manufacture. Typical bypasses are constructed from common pipe fittings such as elbows and nipples which are welded or mechanically coupled together. The welded and mechanically coupled connections can be prone to fabrication defects and leaking.

US1067011A discloses a gate valve of the kind which is used where the valve is subjected to heavy pressures, it being customary to provide such valves with a similar bypass valve which can be opened to equalize the pressure before opening the main valve. There is an arrangement of a bypass valve, the body of which is made in a single casting of such design that all of the parts which have to be machined or finished are accessible through the regular passages to be employed, so that there are no openings to be plugged after the valve has been finished.

US5099437A discloses an emissions monitoring and tracking system. A joint connects two pipes used to conduct hydrocarbons such as petroleum and petroleum by-products. The joint is referred to as a "release point" and under various environmental rules and regulations, is subject to periodic testing for leakage of the hydrocarbons conducted. An identification tag is attached to the joint in a permanent manner such as by use of rivets, an adhesive, a protected container or screws. The tag is in the form of a barcode. The identification tag may be formed of different materials depending upon the substances conducted by the item to which it is attached.

Asme: "Pipe flanges and flanged fitting NPS 1 / 2 through NPS 24 Metric/Inch standard", 30 June 2009, discusses standards associated with pipe flanges and flanged fittings, including pressure-temperature ratings and component sizes.

### SUMMARY

The invention is defined by the appended independent claims. Particular embodiments are set out in the dependent claims.

### BRIEF DESCRIPTION OF THE DRAWINGS

The features and components of the following figures are illustrated to emphasize the general principles of the present disclosure. The drawings are not necessarily drawn to scale. Corresponding features and components throughout the figures may be designated by matching reference characters for the sake of consistency and clarity.
FIG. 1 is top view of a typical valve assembly with a bypass.
FIG. 2 is a perspective view of a valve body with an integral bypass.
FIG. 3 is a side view of the valve body of Figure 2.
FIG. 4 is a cross-sectional view of a lower half of the valve body of Figure 2 taken along line 4-4 in Figure 3.
FIG. 5 is a cross-sectional view of an upper half of the valve body of Figure 2 taken along line 5-5 in Figure 3.
FIG. 6 is a top view of the valve body of Figure 2.
FIG. 7 is a cross-sectional view of the valve body of Figure 2 taken along line 7-7 shown in Figure 3.
FIG. 8 is an end view of the valve body of Figure 2 facing a primary upstream end.
FIG. 9 is a cross-sectional view of the valve body of Figure 2 taken along line 9-9 in Figure 8.
FIG. 10 is a perspective view of the valve body of Figure 2 facing a primary downstream end.
FIG. 11 is a bottom perspective view of the valve body of Figure 2.
FIG. 12 is a perspective view of a completed bypass valve assembly comprising the valve body of Figure 2, a primary valve, and a bypass valve.
FIG. 13A shows a front view of a flange with an identification tab.
FIG. 13B shows a detail view of the identification tab of Figure 13A taken from detail 13B in Figure 13A.
FIG. 13C shows a side view of the flange with the identification tag of Figure 13A.

### DETAILED DESCRIPTION

The present disclosure can be understood more readily by reference to the following detailed description, examples, drawings, and claims, and the previous and following description. However, before the present devices, systems, and/or methods are disclosed and described, it is to be understood that this disclosure is not limited to the specific devices, systems, and/or methods disclosed unless otherwise specified, and, as such, can, of course, vary. It is also to be understood that the terminology used herein is for the purpose of describing particular aspects only and is not intended to be limiting.

The following description is provided as an enabling teaching of the present devices, systems, and/or methods in its best, currently known aspect. To this end, those skilled in the relevant art will recognize and appreciate that many changes can be made to the various aspects of the present devices, systems, and/or methods described herein, while still obtaining the beneficial results of the present disclosure. It will also be apparent that some of the desired benefits of the present disclosure can be obtained by selecting some of the features of the present disclosure without utilizing other features. Accordingly, those who work in the art will recognize that many modifications and adaptations to the present disclosure are possible and can even be desirable in certain circumstances and are a part of the present disclosure. Thus, the following description is provided as illustrative of the principles of the present disclosure and not in limitation thereof.

As used throughout, the singular forms "a," "an" and "the" include plural referents unless the context clearly dictates otherwise. Thus, for example, reference to "a resistor" can include two or more such resistors unless the context indicates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

For purposes of the current disclosure, a material property or dimension measuring about X or substantially X on a particular measurement scale measures within a range between X plus an industry-standard upper tolerance for the specified measurement and X minus an industry-standard lower tolerance for the specified measurement. Because tolerances can vary between different materials, processes and between different models, the tolerance for a particular measurement of a particular component can fall within a range of tolerances.

As used herein, the terms "optional" or "optionally" mean that the subsequently described event or circumstance can or cannot occur, and that the description includes instances where said event or circumstance occurs and instances where it does not.

The word "or" as used herein means any one member of a particular list and also includes any combination of members of that list. Further, one should note that conditional language, such as, among others, "can," "could," "might," or "may," unless specifically stated otherwise, or otherwise understood within the context as used, is generally intended to convey that certain aspects include, while other aspects do not include, certain features, elements and/or steps. Thus, such conditional language is not generally intended to imply that features, elements and/or steps are in any way required for one or more particular aspects or that one or more particular aspects necessarily include logic for deciding, with or without user input or prompting, whether these features, elements and/or steps are included or are to be performed in any particular aspect.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific aspect or combination of aspects of the disclosed methods.

In one aspect, disclosed is a valve body with an integral bypass and associated methods, systems, devices, and various apparatus. The valve body can comprise a primary valve body portion and the bypass. It would be understood by one of skill in the art that the disclosed valve body is described in but a few exemplary aspects among many. No particular terminology or description should be considered limiting on the disclosure or the scope of any claims issuing therefrom.

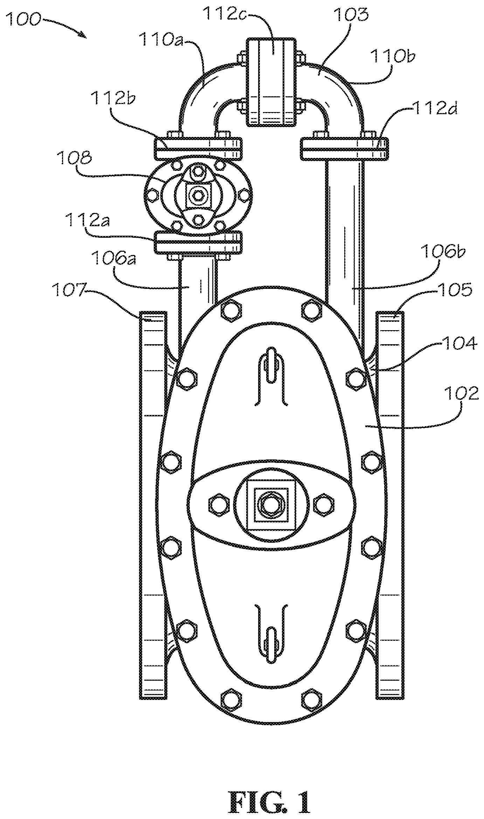

An example of a typical valve assembly 100 with a bypass 103 is disclosed and described in Figure 1. Figure 1 shows a top view of the typical valve assembly 100 built on a typical valve body 101. The typical valve body comprises a primary valve body portion 104 and the typical bypass 103 with a bypass valve 108. A primary valve 102 is built on the primary valve body portion 104 with a first end 105 and a second end 107. The typical bypass 103 comprises a pair of nipples 106a,b, the bypass valve 108, and, a pair of elbows 110a,b connected by a series of flanged connections 112a,b,c,d. The nipples 106a,b are welded to the primary valve body portion 104, thereby connecting the typical bypass 103 to the primary valve body portion 104 by a pair of weld seams (not shown).

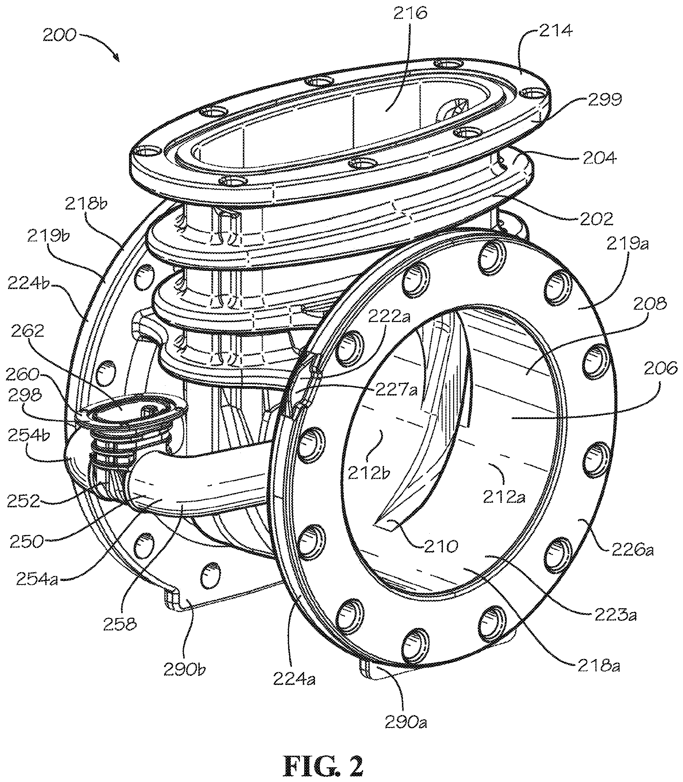

Figure 2 shows a perspective view of a valve body 200 with an integral bypass 250. The valve body 200 comprises a primary valve body portion 202 and the bypass 250. The primary valve body portion 202 defines a primary internal surface 206 and a primary external surface 204. The bypass 250 can be disposed external to the primary valve body portion 202 and can extend away from the primary external surface 204 of the primary valve body portion 202. The primary internal surface 206 defines a primary bore 208 extending through the primary valve body portion 202 from a primary upstream end 218a to a primary downstream end 218b. The primary bore 208 can comprise a primary upstream bore 212a extending through the primary upstream end 218a and a primary downstream bore 212b extending through the primary downstream end 218b. The terms "upstream" and "downstream" should not be viewed as limiting as the valve body 200 is capable of bidirectional fluid flow.

The valve body 200 is a monolithic casting such that the valve body 200 is entirely formed from a single material of homogenous composition throughout. The bypass 250 is seamlessly integrated with the primary valve body portion 202 such that the bypass 250 is incorporated with the primary valve body portion 202 without weld seams or mechanical connections such as threading, flanges, fasteners, interference fits, adhesives, brazing, soldering, or other mechanical methods of connection. The valve body 200 can be comprised of metal, metal alloy, plastic, or other rigid materials. In the aspect shown, the valve body 200 can be cast from a single mold in a single casting operation, unlike the typical valve body 101 of the typical valve assembly 100.

The primary internal surface 206 can also define a primary valve cavity 216 extending inwards from a bonnet-mounting portion 214 of the external surface 204. The bonnet-mounting portion 214 is positioned on a primary bonnet flange 299 of the primary valve body portion 202. The primary valve cavity 216 can intersect the primary bore 208. The primary valve cavity 216 can be configured to house a plurality of valve components such as a primary valve member, a primary stem, and primary valve trim (not shown). In the aspect shown, the primary internal surface 206 can define an integral primary valve seat 210 disposed within the primary valve cavity 210. In other aspects, the primary valve seat 210 can be a separate component, such as a seat disk, formed from a different material such as elastomers, polymers, metals, or any other material. In some aspects, the primary valve seat 210 can be held in position by a seat retainer or a seat shoulder. The primary valve seat 210 can be configured to seal against the primary valve member to isolate the primary upstream bore 212a from the primary downstream bore 212b. In the aspect shown, the valve body 200 can be configured as a gate valve body, and the primary valve member can be a primary gate, sometimes called a wedge, knife, or disk. The valve body 200 can be configured as a rising-stem gate valve or a non-rising-stem gate valve. In other aspects, the valve body 200 can have other configurations such as a ball valve body or a globe valve body. In such aspects, the primary valve member can be a ball or a plug, respectively.

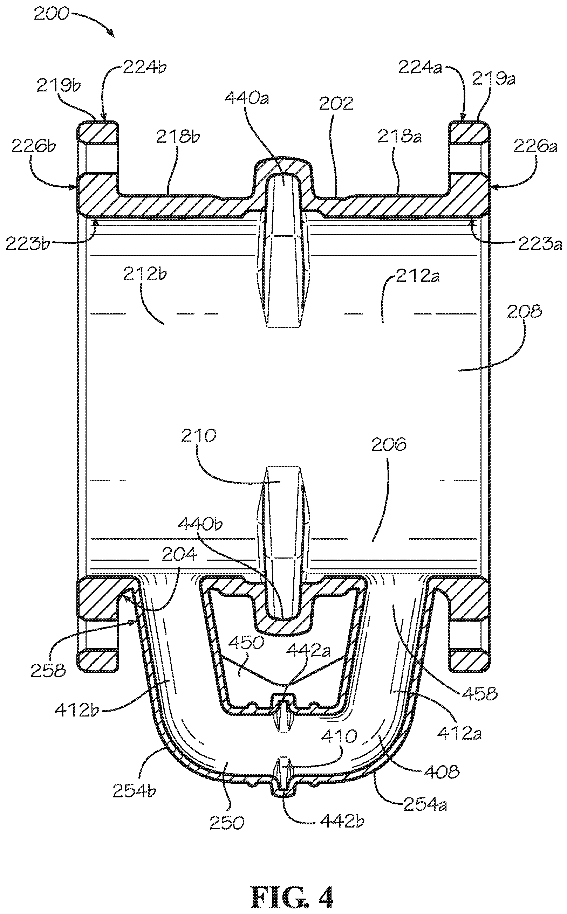

The bypass 250 defines a bypass external surface 258 and a bypass internal surface 458 (shown in Figure 4). The bypass 250 can comprise a bypass valve body 252 positioned between a bypass upstream end 254a and a bypass downstream end 254b. The bypass internal surface 458 defines a bypass valve cavity 262 extending inwards from a bonnet-mounting portion 260 of the bypass external surface 258. The bypass valve cavity 262 can be configured to house a plurality of valve components such as a bypass valve member, a bypass stem, and bypass valve trim (not shown). The bonnet-mounting portion 260 can be positioned on a bypass bonnet flange 298 of the bypass valve body 252. The bypass 250 can be positioned at any angle around the primary valve body portion 202 of the valve body 200. For example, the aspect of the valve body 200 of Figures 2-12 shows the bypass 250 positioned on the primary valve body portion 202 in a side-mounted configuration. In other aspects, for example, the valve body 200 can be configured with the bypass 250 in a bottom-mount position in which the bypass 250 is positioned opposite from the primary bonnet flange 299 of the primary valve body portion 202.

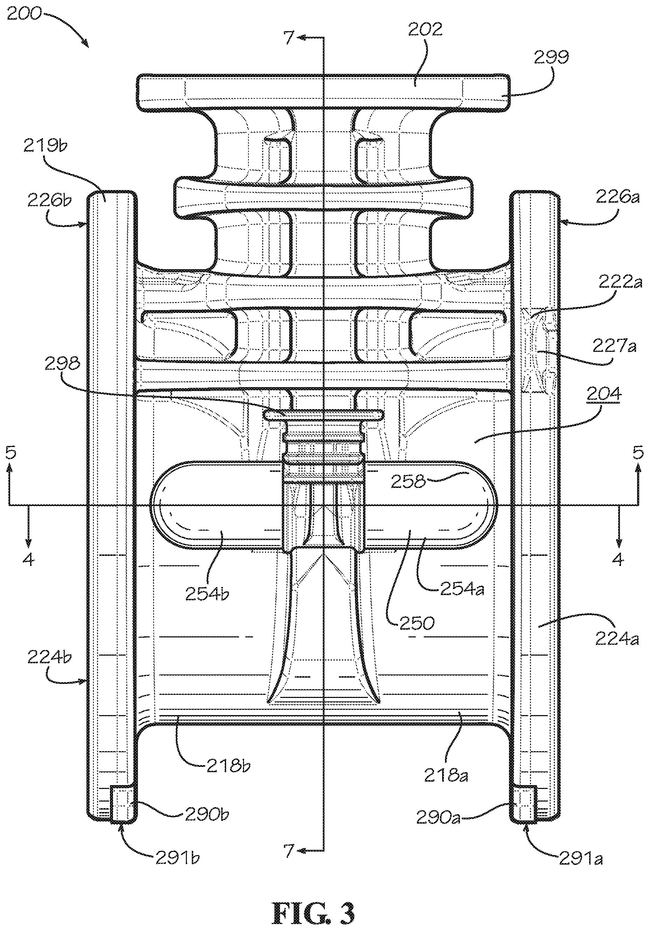

In the aspect shown, the primary valve body portion 202 can comprise an upstream flange 219a disposed at the primary upstream end 218a and a downstream flange 219b disposed at the primary downstream end 218b. Each flange 219 can be substantially annular to the primary bore 208, and can define an inner circumferential surface 223 and an outer circumferential surface 224. Figure 2 shows an inner circumferential surface 223a, which can be a portion of the primary internal surface 206 defining the primary upstream bore 212a, and an outer circumferential surface 224a for the upstream flange 219a. Figure 2 also shows an outer circumferential surface 224b for the downstream flange 219b, and an inner circumferential surface 223b for the downstream flange 219b is shown in Figure 4. The inner circumferential surface 223b can be a portion of the primary internal surface 206 defining the primary downstream bore 212b. In the aspect shown, the outer circumferential surfaces 224a,b of the flanges 219a,b each can define a rest 290a,b, respectively. The rests 290a,b can extend outwards from the flanges 219a,b, and each of the rests 290a,b can respectively define a flat resting surface 291a,b, as shown in Figure 3. The flat resting surfaces 291 can be disposed at a bottom of the valve body 200 opposite from the bonnet-mounting surface 214. The resting surfaces 291 can be configured to provide a stable support for the valve body 200 when resting on a flat surface.

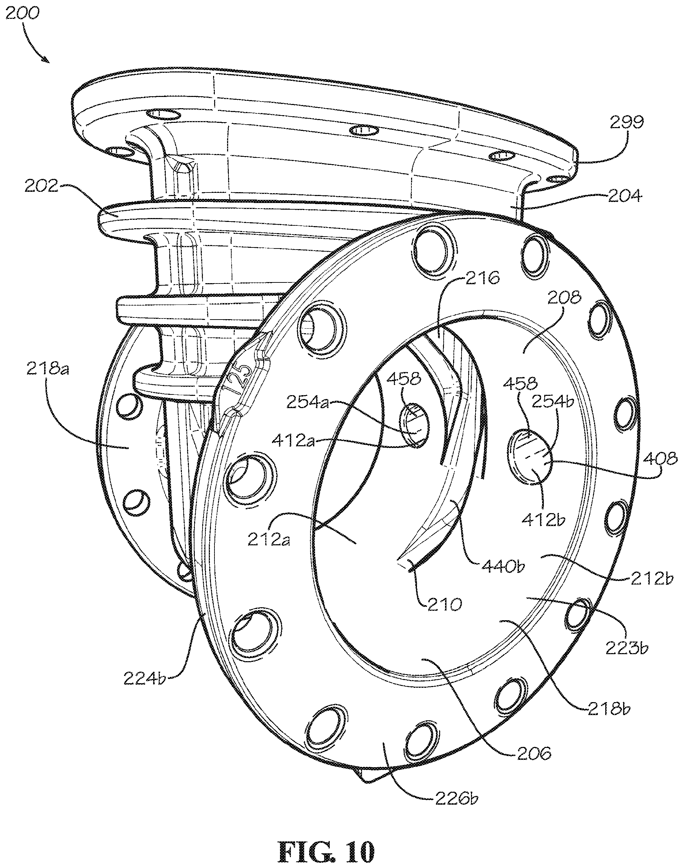

Each flange 219 can define a plurality of fastener holes for mechanically connecting the flange 219 to a complimentary flange of a piping system. In Figure 2 and Figure 4, a flange face surface 226a of the upstream flange 219a is shown extending between the inner circumferential surface 223a and the outer circumferential surface 224a. Figures 4 and 10 show a flange face 226b of the downstream flange 219b extending between the inner circumferential surface 223b and the outer circumferential surface 224b. In the aspect of Figures 2-12, the flanges 219a,b are flat face flanges. In other aspects, the flanges can be raised face flanges, tongue-and-groove flanges, ring-type joint flanges, or any other type of flanges. In some aspects, the primary valve body portion 202 may not have the flanges 219a,b, but can instead be configured to be butt-welded or socket-welded directly to an end of a piping system.

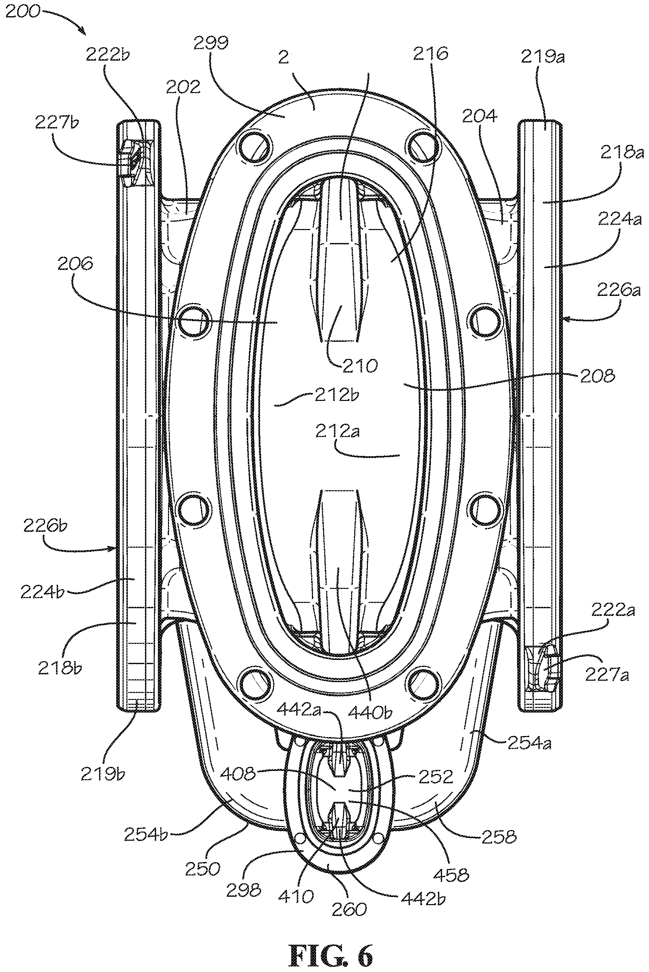

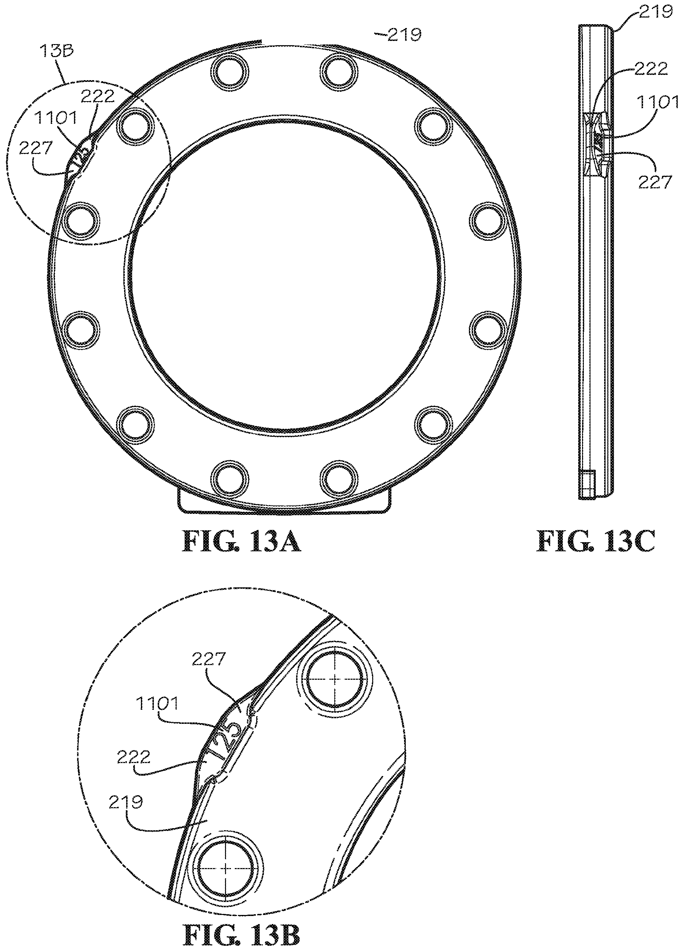

Either one of or both of the flanges 219a,b comprises an identification tab 222 disposed on the outer circumferential surface 224a,b extending radially outwards from the respective flange 219. The identification tabs 222 can extend outwards beyond a radius of the outer circumferential surfaces 224 so that the identification tabs 222 are raised from the outer circumferential surfaces 224. Figure 2 shows an identification tab 222a disposed on the outer circumferential surface 224a of the upstream flange 219a, and Figure 6 shows an identification tab 222b disposed on the outer circumferential surface 224b of the downstream flange 219b. The identification tabs 222 can define various indicia 1101 as shown more clearly in Figure 13B. The indicia 1101 can be raised from or recessed into, such as through engraving or stamping, an indicia surface 227 of the identification tabs 222, such as an indicia surface 227a of identification tab 222a or an indicia surface 227b of identification tab 222b, or a sticker or other label comprising indicia 1101 can be mounted on the indicia surface 227. In an example aspect useful for understanding the present disclosure, as shown in Figure 2, the indicia surface 227a angles away from the flange face surface 226a and extends outwards from the outer circumferential surface 224a to make the indicia 1101 readily visible when the flange 219 is fastened to a complimentary flange of the pipe system. According to the present disclosure, the flange face surface 226 is parallel to or substantially coplanar with the indicia surface 227. In some aspects, the flanges 219 can each have multiple identification tabs 222.

The identification tabs 222 can vary in size and shape and can be larger or smaller than in the aspects shown. The size of the identification tabs 222 can vary dependent upon how much information the indicia 1101 are configured to contain. The indicia 1101 can specify helpful information such as a design standard (for example ASME/ANSI, DIN, or AWWA standards), flange class, or other information such as the size of fasteners needed for fastening the flanges 219, the torque specification for tightening the flanges 219, the bore diameter of the flange 219, or any other useful information deemed desirable. Often in the field, such useful information is written in a work pack which can be accidentally lost, damaged, or destroyed at a work site. The instant availability of such information can reduce delays and errors in the field when installing, maintaining, or repairing the piping system.

Figure 3 shows a side view of the valve body 200, facing the bypass 250. The bypass 250 is disposed between the upstream flange 219a disposed at the primary upstream end 218a and the downstream flange 219b disposed at the primary downstream end 218b. As shown in Figures 3-7 and 11, the bypass external surface 258 can seamlessly intersect the primary external surface 204 at the primary upstream end 218a and the primary downstream end 218b. Figure 3 depicts the identification tab 222a disposed on the outer circumferential surface 224a of flange 219a. The side view emphasizes that, in the example aspect useful for understanding the present disclosure as shown, the indicia surface 227a angles away from the upstream flange face 226a. In this example aspect, the indicia surface 227a can be nonparallel to the upstream flange face 226a. In the present disclosure, the indicia surface 227a is parallel to the upstream flange face 226a or coplanar with the upstream flange face 226a.

Figure 4 shows a cross-sectional view of a lower half of the valve body 200. Figure 4 shows the primary bore 208 defined by the primary internal surface 206. The primary internal surface 206 can be seamless and unbroken by welds or mechanical connections. The primary bore 208 can comprise the primary upstream bore 212a and the primary downstream bore 212b with the primary valve seat 210 positioned between the primary upstream bore 212a and the primary downstream bore 212b. The primary valve seat 210 can comprise a pair of primary seat grooves 440a,b configured to guide and seal against the primary gate when selectively moving the primary gate between an open and closed position.

The bypass 250 defines the bypass internal surface 458 which defines a bypass bore 408 and which intersects the bypass valve cavity 262. In the aspect shown, the internal surface 458 can also define an integral bypass valve seat 410. In other aspects, the bypass valve seat 408 can be a separate component, such as a seat disk, formed from a different material such as elastomers, polymers, metals, or any other material. In some aspects, the bypass valve seat 410 can be held in position by a seat retainer or a seat shoulder. The bypass internal surface 458 can be seamless and unbroken by welds or mechanical connections. The bypass bore 408 can comprise a bypass upstream bore 412a extending through the bypass upstream end 254a and a bypass downstream bore 412b extending through the bypass downstream end 254b. The bypass valve seat 410 can be positioned between the bypass upstream bore 412a and the bypass downstream bore 412b. The bypass bore 408 can extend through the bypass valve body 252. The bypass valve seat 410 can be disposed within bypass valve cavity 262 of the bypass valve body 252. The bypass valve seat 410 can be configured to seal against the bypass valve member (not shown) to isolate the bypass upstream bore 412a from the bypass downstream bore 412b.

The bypass valve body 252 of the aspect shown can be configured as a gate valve body, and the bypass valve member can be a bypass gate, also called a wedge or disc. In other aspects, the bypass valve body 252 can be configured as a ball valve body, a globe valve body, or a choke valve body. In other aspects, the valve body 200 and the bypass valve body 252 can be configured as different types of valves from one another. For example, the valve body 200 can be configured as a gate valve, and the bypass valve body 252 can be configured as a globe valve. The bypass valve seat 410 can comprise a pair of bypass seat grooves 442a,b configured to guide and seal against the bypass gate when selectively moving the bypass gate between an open position and a closed position. The bypass 250 can comprise an integral reinforcement web 450 extending between the bypass upstream end 254a, the bypass valve body 252, and the bypass downstream end 254b. The reinforcement web 450 can be configured to strengthen and stiffen the bypass 250.

As shown, the bypass upstream bore 412a can extend through the primary upstream end 218a of the primary valve body portion 202 from the primary external surface 204 to the primary internal surface 206. The bypass downstream bore 212b can extend through the primary downstream end 218b of the primary valve body portion 202 from the primary external surface 204 to the primary internal surface 206. The bypass internal surface 458 can seamlessly intersect the primary internal surface 206 at the primary upstream end 218a and the primary downstream end 218b without any welds or mechanical connections such as threading, flanges, fasteners, interference fits, or other mechanical methods of connection. The bypass internal surface 458 can be seamless from the primary upstream bore 212a to the bypass valve cavity 262 of the bypass valve body 252 and from the primary downstream bore 212b to the bypass valve cavity 262 of the bypass valve body 252. As shown, the bypass external surface 258 can seamlessly intersect the primary external surface 204 at the primary upstream end 218a and the primary downstream end 218b as well.

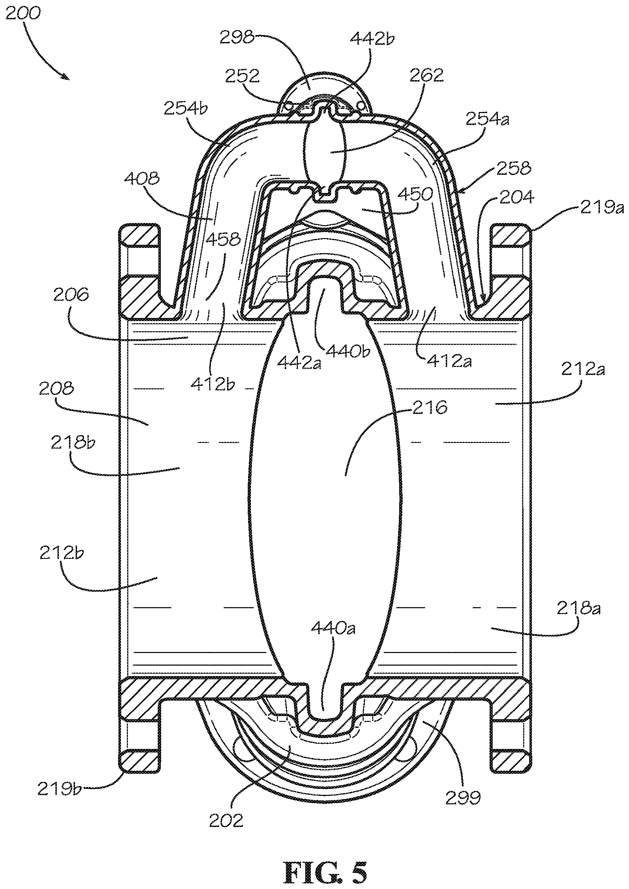

Figure 5 shows a cross-sectional view of an upper half of the valve body 200. Figure 5 shows the primary valve cavity 216 extending from the primary bore 208 through the bonnet-mounting portion 214 of the primary external surface 204. The primary seat grooves 440a,b can extend through the primary valve cavity 216. Figure 5 also shows the bypass valve cavity 262 extending from the bypass bore 408 through the bonnet-mounting portion 260 of the bypass external surface 258.

Figure 6 shows a top plan view of the valve body 200. The primary valve seat 210 and the primary seat grooves 440a,b are visible through the primary valve cavity 216. The primary valve cavity 216 can extend inwards from the bonnet-mounting portion 214 of the primary exterior surface 204 until the primary valve cavity 216 intersects the primary bore 208. Similarly, the bypass valve seat 410 and the bypass seat grooves 442a,b are visible from the bonnet-mounting portion 260 of the bypass exterior surface 258. The bypass valve cavity 262 can extend inwards from the bonnet-mounting portion 260 of the bypass exterior surface 258 until the bypass valve cavity 262 intersects the bypass bore 408. As shown, both the primary bonnet flange 299 and the bypass bonnet flange 298 can define a plurality of fastener holes configured for mounting a bonnet to each of the primary bonnet flange 299 and the bypass bonnet flange 298. In other aspects, the bonnets can be welded to the primary bonnet flange 299 and the bypass bonnet flange 298.

Figure 6 also shows two identification tabs 222a,b. Identification tab 222a is disposed on the outer circumferential surface 224a of the upstream flange 219a. In the example aspect useful for understanding the present disclosure as shown, the indicia surface 227a angles away from the upstream flange face 226a. Identification tab 222b is disposed on the outer circumferential surface 224b of the downstream flange 219b. The indicia surface 227b angles away from the downstream flange face 226b. In the example aspect useful for understanding the present disclosure as shown, the indicia surfaces 227a,b are each set back from the flange faces 226a,b, respectively.

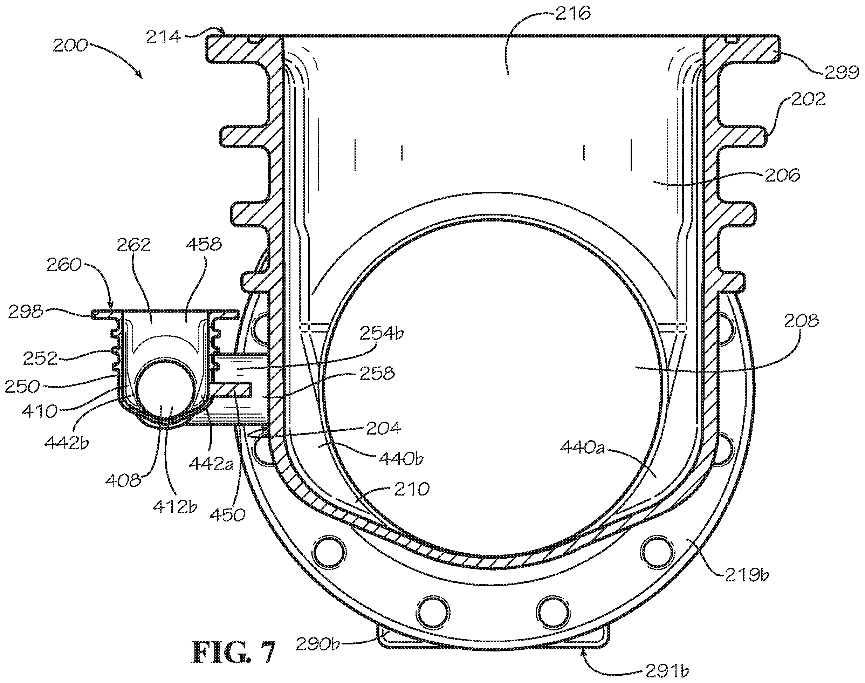

Figure 7 shows a cross-sectional view of the valve body 200. The cross-section shows the primary valve cavity 216 defined by the primary internal surface 206. The cross-sectional view shows each of the primary seat grooves 440a,b of the primary valve seat 210 bisected. The primary downstream bore 212b and the downstream flange 219b are visible. The rest 290b is shown extending outwards from the downstream flange 219b and defining the resting surface 291b. Similarly, Figure 7 shows the bypass valve cavity 262 defined by the bypass internal surface 458. The cross-sectional view shows each of the bypass seat grooves 442a,b of the bypass valve seat 410 bisected. The bypass downstream bore 412b of the bypass downstream end 254b is visible. The reinforcement web 450 is also shown extending between the bypass valve body 252 and the bypass downstream end 254b.

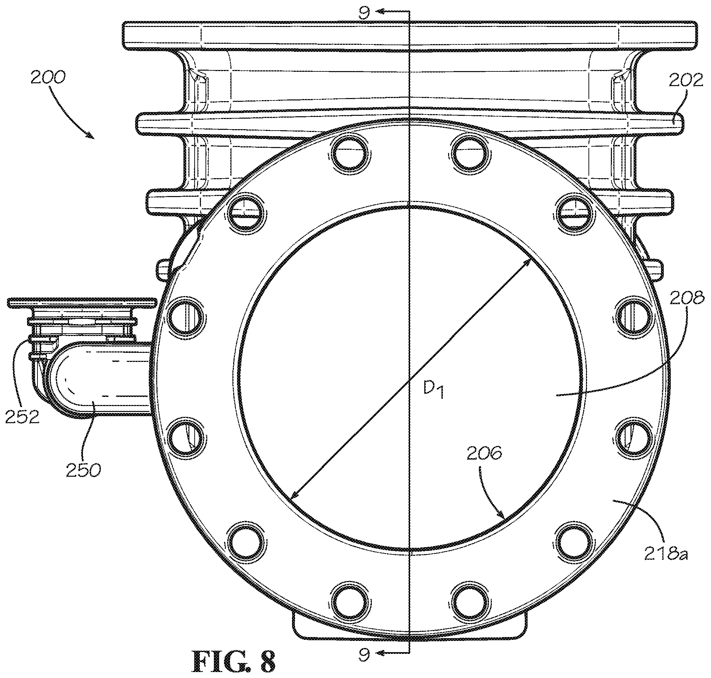

Figure 8 shows an end view of the valve body 200 facing the primary upstream end 218a. In the aspect shown in Figure 8, the primary valve body portion 202 can be a full-port valve, such that neither the primary valve member (not shown) nor the primary valve seat 210 reduces a primary bore diameter D₁ or partially occlude the primary bore 208. The primary bore diameter D₁ is measured across the primary internal surface 206 of the primary bore 208. In other aspects, the primary valve body portion 202 can be a conventional-port or reduced-port configuration in which the primary valve seat 210 encroaches the primary bore 208. The bypass valve body 252 can also be either a full-port valve or a reduced-port valve configuration. In the aspect shown, the bypass valve body 252 is a full-port valve (shown in Figure 7).

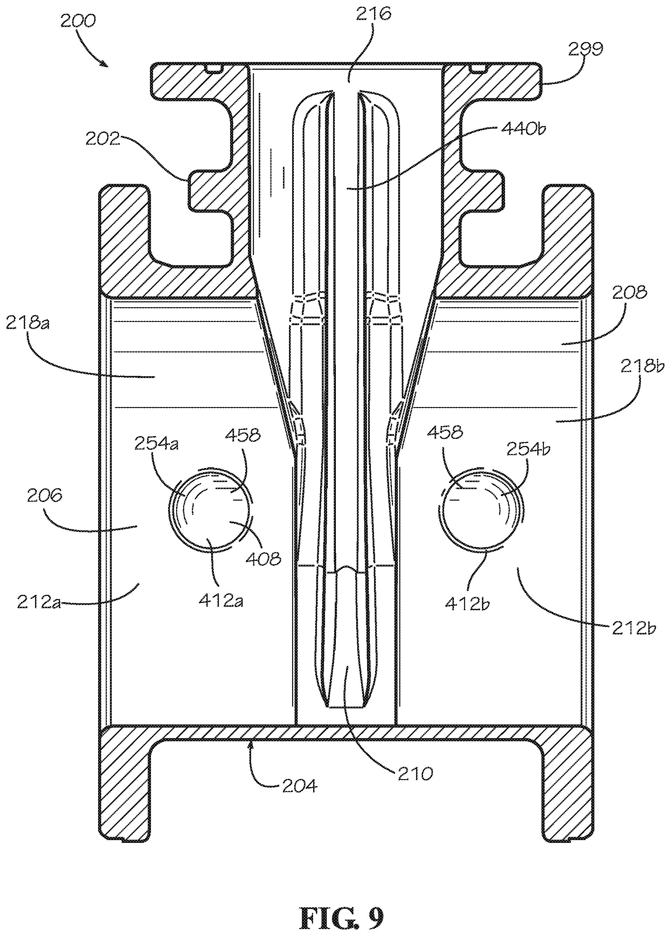

Figure 9 shows a cross-sectional view of the valve body 200. Figure 10 shows a perspective view of the valve body 200 facing the primary downstream end 218b. Figures 9 and 10 show the primary valve seat 210 positioned between the primary upstream bore 212a and the primary downstream bore 212b of the primary bore 208. The primary seat groove 440b can extend upwards from the primary bore 208 into the primary valve cavity 216, towards the primary bonnet flange 299.

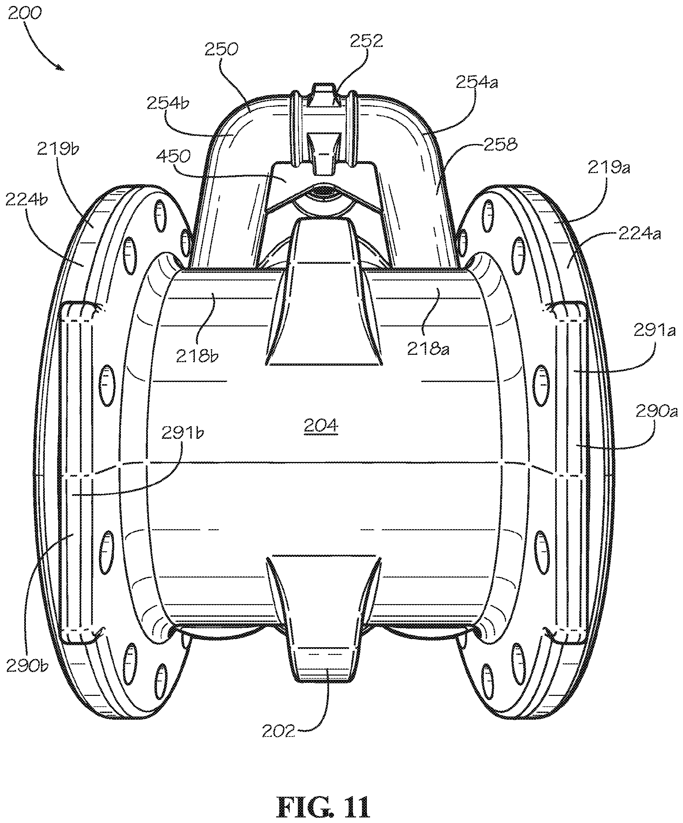

Figure 11 shows a bottom perspective view of the valve body 200. Figure 11 shows the bypass 250 disposed external to the primary valve body portion 202, and the bypass external surface 258 seamlessly intersecting the primary external surface 204 without welds, joints, mechanical connections, or any other type of seam. As shown, the bypass 250 is disposed between the upstream flange 219a disposed at the primary upstream end 218a and the downstream flange 219b disposed at the primary downstream end 218b.

As previously described, according to the present disclosure, the valve body 200 is a monolithic casting formed from a single material in a single casting operation, and the bypass 250 is seamlessly integrated with the primary valve body portion 202 without any welds or mechanical connections such as threading, flanges, fasteners, interference fits, adhesives, brazing, soldering, or other mechanical methods of connection. The valve body 200 can be cast from a single mold. The mold can be formed through an additive manufacturing process, such as a 3D sand printing process.

Additive manufacturing refers to a process in which a 3D object can be formed by depositing or bonding successive layers of material to the previous layers of material. Additive manufacturing can comprise different types of processes such as a deposition, light polymerization, powder bed, or lamination process. For example, in a deposition process, material can be selectively deposited according to a cross-section of the 3D object corresponding to that layer. The material can be deposited through methods such as extruding a material in a molten state which can fuse to the previous layer or depositing material in the form of a wire or granule while applying an energy source such as an electrical current or laser to fuse the material to the previous layer. The material is only applied to areas corresponding to the cross-section of the layer. Deposition processes comprise, but are not limited to, fused deposition modeling, robocasting, directed energy deposition, electron beam freeform fabrication, 3D printer extrusion, and material jet printing.

By contrast, in a powder bed process, a layer of loose granular material can be evenly applied in a bed or a job box, and areas of the layer corresponding to the cross-section of the 3D object for that layer can be selectively treated to fuse or bind the material together. In some powder bed processes, a glue or binder can be selectively sprayed on the layer of granular material which binds the loose granular material together to form the cross-section. In some powder bed processes, an energy source such as a laser, electron beam, or electrical current can selectively be applied to melt and sinter the granular material corresponding to the cross-section of the 3D object. Successive layers are sintered or bound to previous layers, and the remaining loose granular material can be removed leaving the 3D object behind upon completion. Powder bed processes comprise, but are not limited to, binder jetting, 3D sand printing, direct metal laser sintering, electron beam melting, selective heat sintering, and selective laser melting.

Light polymerization processes can be similar to powder bed processes with the difference being that the material is often deposited as a liquid, such as a polymer resin in a bath or a vat instead of a job box. The material can be selectively treated with an energy source such as a light source, heat source, or laser corresponding to the cross-section for the layer. The energy source can cause the material to solidify, thereby forming the cross-section of the 3D object for the layer. Light polymerization processes can comprise, but are not limited to, stereolithography and digital light processing.

Lamination processes supply material in the form of a foil or a film, often fed from a roll, which can be treated with an adhesive or bonded by other means. The material is fed over a platform upon which the 3D object is built. A mechanical means, such as a blade, or an energy source, such as a laser, cuts out the first layer corresponding to the first cross-section of the 3D model from the material and deposits the material on the platform. The platform can then lower and a new portion of the foil or film is fed over the platform, and a successive layer is cut out corresponding to a second cross-section of the 3D object. The successive layer can then be bonded to the previous layer by the adhesive. Lamination processes can comprise, but are not limited to, laminated object manufacturing and ultrasonic consolidation.

When forming the mold in the 3D sand printing process, a first arm of a 3D sand printing machine can deposit a thin, substantially planar layer of sand in the job box. The layer of sand can have a layer thickness. A second arm can traverse over the layer of sand and selectively spray a binder on the layer of sand corresponding to the cross-section of the 3D object for a first layer. Areas of the sand sprayed by the binder can cement together while areas not sprayed by the binder remain loose and granular. The layer can be selectively sprayed with the binder on the layer of sand corresponding to the cross-section of the mold for the first layer at a first mold height. The cross-sections of the mold can be formed complimentary to the valve body 200 such that solid portions of the valve body 200, such as the flanges 219, can correspond to voids in the mold, and openings or cavities in the valve body 200, such as the primary valve cavity 216, can correspond to solid portions of the mold.

The job box can then lower by an incremental distance equal to the layer thickness, and the first arm can then deposit a successive planar layer of sand. The second arm can then traverse over the successive layer of sand, and can selectively spray the binder on the successive layer of sand corresponding to a cross-section of the mold of a second layer at a second mold height which can cement the sprayed areas and can bond the sprayed areas of the second layer to the sprayed areas of the first layer. The process can repeat alternatively depositing the substantially planar layers of sand and then selectively spraying the binder on the layer of sand until the mold has reached its full height. The mold can be built up from the bottom layer by layer until the mold is fully formed.

At this time, the mold has been formed by the sand which has been treated by the binder while untreated sand remains loose and granular and can be shaken, vacuumed, blown, or brushed away from the mold. In some aspects, the mold can comprise multiple subcomponents which can be glued or mechanically connected to assemble the mold. The mold can define vents to allow air to escape when molten material is poured into the mold. The mold can define a valve body mold cavity formed complimentary to a shape of the valve body 200. In some aspects, the mold can comprise cores formed complimentary to any one of the primary bore 208, the bypass bore 258, the primary valve cavity 216, or the bypass valve cavity 258. Upon assembling the mold, a molten material, such as molten metal, can be poured into the mold. After the molten material has solidified, the valve body 200 can be removed from the mold. Because the mold is made of sand, it can be destroyed to remove the bypass vale body 200, and portions of the mold within the primary bore 208, the bypass bore 258, the primary cavity 216, and the bypass valve cavity 258 can be broken up to be removed. The mold can be broken up by mechanical means such as with a hammer, chisel, or drill, by vibrations such as with ultrasonic waves, or by spraying with water such as from a high-pressure source. In some aspects, the binder can be water-soluble. In other aspects, the mold can be re-used. In other aspects, the valve body 200 can be formed by 3D printing the valve body 200 from a suitable rigid material rather than 3D printing the mold.

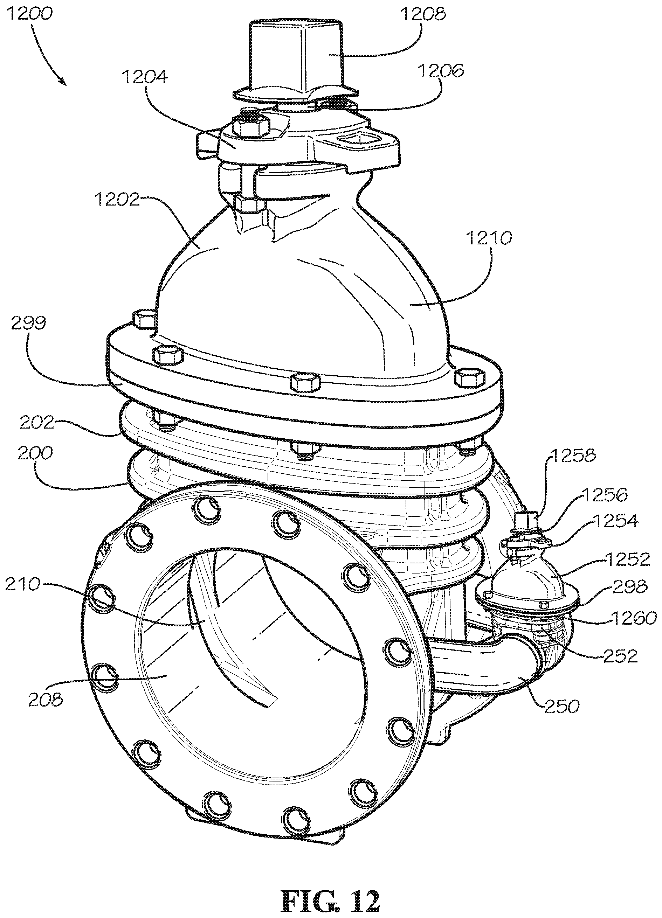

Figure 12 shows a perspective view of an valve assembly 1200 comprising a primary valve 1210 and a bypass valve 1260. The valve assembly 1200 can be assembled on the valve body 200. The primary valve 1210 can be assembled on the primary valve body portion 202 of the valve body 200, and the bypass valve 1260 can be assembled on the bypass valve body 252. The bypass valve 1260 can be seamlessly connected to the primary valve 1210 by the bypass 250. The bypass valve 1260 can be disposed between the bypass upstream end 254a and the bypass downstream end 254b.

The primary valve 1210 can comprise a primary bonnet 1202, a primary stuffing box 1204, a primary stem 1206, a primary operating nut 1208, the primary valve body portion 202 of the valve body 200, and a primary valve member (not shown). In the aspect shown, the primary valve member can be a primary gate. The primary bonnet 1202 can be fastened to the primary bonnet flange 299 of the primary valve body portion 202. The primary stuffing box 1204 can be fastened atop the primary bonnet 1202 with the primary stem 1206 extending through an orifice in the primary stuffing box 1204. The primary operating nut 1208 can be connected to and rotationally fixed to the primary stem 1206. In other aspects, a primary handwheel or other rotation mechanism can be connected and rotationally fixed to the primary stem 1206. The primary bonnet 1202 and the primary stuffing box 1204 can be configured to seal the primary valve cavity 216 and to seal against the primary stem 1206.

The bypass valve 1260 can comprise a bypass bonnet 1252, a bypass stuffing box 1254, a bypass stem 1256, a bypass operating nut 1258, the bypass valve body 252 of the valve body 200, and a bypass valve member (not shown). In the aspect shown, the bypass valve member is a bypass gate. The bypass bonnet 1252 can be fastened to the bypass bonnet flange 298 of the bypass valve body 252. The bypass stuffing box 1254 can be fastened atop the bypass bonnet 1252 with the bypass stem 1256 extending through an orifice in the bypass stuffing box 1254. The bypass operating nut 1258 can be connected to and rotationally fixed to the bypass stem 1256. The bypass bonnet 1252 and the bypass stuffing box 1254 can be configured to seal the bypass valve cavity 262 and to seal against the bypass stem 1256.

In the aspect shown in Figure 12, the primary valve 1210 and the bypass valve 1260 can be configured as gate valves, and the primary valve member and the bypass valve member can be the primary gate and the bypass gate, respectively. By turning the respective stems 1208, 1258, the primary valve 1210 and the bypass valve 1260 can each be selectively operated about and between an open position and a closed position. With the primary valve 1210 in the closed position, the primary gate seals against the primary valve seat 210, blocking the primary bore 208 and isolating the primary upstream bore 212a from the primary downstream bore 212b. With the primary valve 1210 in the open position, the primary gate is positioned within the primary valve cavity 216 and the primary bonnet 1202 which renders the primary bore 208 open and unobstructed. In the open position, the primary upstream bore 212a and the primary downstream bore 212b are in direct fluid communication with one another.

With the bypass valve 1260 in the closed position, the bypass gate seals against the bypass valve seat 410, blocking the bypass bore 408 and isolating the bypass upstream bore 412a from the bypass downstream bore 412b. With the bypass valve 1260 in the open position, the bypass gate is positioned within the bypass valve cavity 262 and the bypass bonnet 1252 which renders the bypass bore 408 open and unobstructed. In the open position, the bypass upstream bore 412a and the bypass downstream bore 412b are in direct fluid communication with one another.

In operation, both the primary valve 1210 and the bypass valve 1260 can both be in the closed position to prevent the travel of a fluid from the primary upstream bore 212a to the primary downstream bore 212b. If the bypass valve 1260 is in the open position while the primary valve 1210 is in the closed position, the primary upstream bore 212a and the primary downstream bore 212b are in indirect fluid communication through the bypass bore 408, and the fluid can travel from the primary upstream end 218a to the primary downstream end 218b. In typical operation, the bypass valve 1260 remains in the closed position. If the primary valve 1210 is selectively operated and placed in the closed position, no fluids can pass from the primary upstream end 218a to the primary downstream end 218b. If a significant pressure differential develops between the primary upstream bore 212a and the primary downstream bore 212b, an unbalanced force can be exerted on the primary gate which can prevent the primary valve 1210 from being operated to the open position due to a force of friction, caused by the unbalanced force, acting on the primary gate.

In this situation, the bypass valve 1260 can be selectively operated to the open position which allows the fluid to bypass the primary gate. The bypass valve 1260 and the bypass gate are also affected by the unbalanced force; however, the bypass bore 408 is smaller in diameter than the primary bore 208 which reduces the effect of the unbalanced force due to the bypass bore 408 defining a smaller cross-sectional area. After a period of time, the pressure differential can be reduced or eliminated which reduces or eliminates the unbalanced force and the friction force acting on the primary gate, thereby allowing the primary valve 1210 to be selectively operated to the open position. After operating the primary valve 1210 to the open position, the bypass valve 1260 is typically operated to the closed position.

Using the bypass 250 to conduct a bypass operation of the closed primary valve 1210 can be a violent and stressful operation for the valve body 200, and specifically the bypass 250. In liquid service, a significant water-hammer effect is exerted on the bypass 250 at the moment that the bypass valve 1260 is first opened. In gas service, the bypass 250 can also be exposed to extremely low temperatures due to the Joules-Thomson effect which causes the gas to cool as it expands when traveling through the bypass 250 from a high-pressure side of the closed primary valve 1210 to a lower pressure side of the valve. The Joules-Thomson effect can also cause droplets of condensed liquid to drop out of the gas. If the pressure differential is great enough, the gas may approach sonic velocities as well. The speed of the gas traveling through the bypass 250, especially with the presence of condensed droplets, can be extremely erosive on the bypass 250. The bypass operation can also cause vibration in the bypass 250 which can stress and fatigue components.

However, the monolithic casting of the valve body 200, resulting in the integral and seamless bypass 250, is well-suited for such service and is superior to the typical bypass valve assembly 100 shown in Figure 1. The flanged connections 112 are susceptible to the water-hammer effect as it places significant stress on the fasteners which can lead to leaking. Additionally, the internal sealing surface defined by the flanged connections 112 is not uniform and smooth which can exacerbate erosion caused during bypass operations. Each of the flanged connections 112 represents a possible leak path which is eliminated from the design of the integral bypass 250.

Because of the precision and smooth surfaces of the molds produced by 3D sand casting, very little finishing work is required for the valve body 200. By contrast, the typical bypass 103 can frequently require re-work and intensive finishing work to produce an acceptable finished product which can add to manufacturing costs. Because of the relatively short lengths of the fittings comprising the typical bypass 103, it is difficult to maintain tight fabrication tolerances as well to adjust for any deviation thereof. For instance, when the nipples 106 are welded to the primary valve body portion 104, heat distortion and the welding process can affect the overall lengths of the nipples 106 as well as the angles at which nipples 106 extend outwards from the primary valve body portion 104. However, because of the short length of the nipples 106, the nipples 106 cannot be easily deflected to aid in mating flanged connections 112. The elbows 110 are short, stiff, pre-manufactured pipe fittings which cannot be readily altered in order to account for out-of-tolerance dimensions which can negatively affect the mating and seal quality of the flanged connections 112. The seal quality of a flanged connection 112 is very sensitive to angular and dimensional misalignment, and many design codes include limits on the degree to which force can be used to align the flanges when mating a flanged connection 112.

Additionally, flanged connections 112 under residual stress from misalignment are also more sensitive to effects such as water-hammer, vibration, and thermal contraction. Residual stress can also lead to cracking and embrittlement in corrosive service or sulfide service. The flanged connections 112 typically employ a gasket positioned between each of the flanges which is often made of a different material such as elastomers, polymers, and graphite. These gaskets exhibit different thermal expansion coefficients from the flanges of the flange connections 112 which are typically made of metals or plastics. Consequently, under extreme temperature changes such as those caused by the Joules-Thomson effect, the gasket can shrink away from the flanges causing a failure in the seal. The welded connections attaching the nipples 106 to the primary valve body portion 104 are also susceptible to failure due to bypass operations. Welded connections often have small inclusions such as porosity, slag, or cracks which can grow when subjected to vibration or extreme thermal stresses.

Another advantage of the integral bypass 250 is that because the bypass 250 is integrally cast with the bypass valve body 200, a shape of the bypass 250 is not limited by the machining capabilities of equipment such as mills and lathes, nor is the shape limited by the availability of off-the-shelf fittings and components. Integral strengthening features such as the reinforcement web 450 can also be added to the bypass 250. Consequently, the shape of the bypass 250 can be optimized to provide increased resistance to erosion, reduced water-hammer, and improved flow characteristics such as direct laminar flow and reduced turbulence. These improved flow characteristics can reduce fluid frictional loss. The bypass 250 can also be positioned closer to the primary valve body portion 202 to reduce the footprint of the bypass valve body 200 for use in space-critical environments.

In one exemplary aspect, a valve body with an integral bypass can comprise a primary valve body portion defining a primary internal surface and a primary external surface, the primary internal surface defining a primary bore extending through the primary valve body portion from a primary upstream end to a primary downstream end, the primary bore comprising a primary upstream bore extending through the primary upstream end and a primary downstream bore extending through the primary downstream end, the primary valve body portion configured to house a valve member between the primary upstream bore and the primary downstream bore; and the bypass seamlessly integrated with the primary valve body portion, the bypass defining a bypass external surface and a bypass internal surface, the bypass internal surface defining a bypass bore, the bypass bore comprising a bypass upstream bore and a bypass downstream bore, the bypass upstream bore extending through the primary upstream end of the primary valve body portion from the primary external surface to the primary internal surface of the primary upstream bore, the bypass downstream bore extending through the primary downstream end of the primary valve body portion from the primary external surface to the primary internal surface of the primary downstream bore, the bypass internal surface seamlessly intersecting the primary internal surface at the primary upstream end and the primary downstream end.

In a further exemplary aspect, the bypass body can comprise a monolithic casting formed from a single material. In a further exemplary aspect, the bypass can be disposed external to the primary valve body portion, and the bypass external surface can seamlessly intersect the primary external surface at the primary upstream end and the primary downstream end. In a further exemplary aspect, the primary valve body portion can defines a primary valve cavity extending inwards from a bonnet-mounting portion of the primary external surface; the primary valve cavity can intersect the primary bore; the primary internal surface can define an integral primary valve seat; and the primary valve seat can be disposed within the primary valve cavity. In a further exemplary aspect, the bypass can be disposed between an upstream flange disposed at the primary upstream end and a downstream flange disposed at the primary downstream end.

In a further exemplary aspect, the primary valve body portion can comprise a flange disposed at a one of the primary upstream end and the primary downstream end; the flange can be substantially annular to the primary bore; the flange can define an inner circumferential surface and an outer circumferential surface; and an identification tab can be disposed on the outer circumferential surface and extends radially outwards from the flange. In a further exemplary aspect, the identification tab can define indicia. In a further exemplary aspect, the valve body can be a gate valve body. In a further exemplary aspect, the bypass can comprise a bypass valve body; the bypass bore can extend through the bypass valve body; the bypass internal surface can define an integral bypass valve seat; and the bypass valve seat can be disposed within the bypass valve body.

In another exemplary aspect, a valve assembly can comprise a primary valve comprising a primary stem and a primary valve member configured to seal against a primary valve seat, the primary valve assembled on a primary valve body portion of a valve body, the primary valve body portion defining a primary internal surface and a primary external surface, the primary internal surface defining a primary bore extending through the primary valve body portion from a primary upstream end to a primary downstream end, the primary bore comprising a primary upstream bore extending through the primary upstream end and a primary downstream bore extending through the primary downstream end; and a bypass valve comprising a bypass stem and a bypass valve member configured to seal against a bypass valve seat, the bypass valve assembled on a bypass valve body, the bypass valve body defined by a bypass of the valve body, the bypass valve seamlessly connected to the primary valve body portion by the bypass, the bypass seamlessly integrated with the primary valve body portion, the bypass defining a bypass external surface and a bypass internal surface, the bypass internal surface defining a bypass bore, the bypass bore comprising a bypass upstream bore and a bypass downstream bore, the bypass upstream bore extending through the primary upstream end of the primary valve body portion from the primary external surface to the primary internal surface of the primary upstream bore, the bypass downstream bore extending through the primary downstream end of the primary valve body portion from the primary external surface to the primary internal surface of the primary downstream bore, the bypass internal surface seamlessly intersecting the primary internal surface at the primary upstream end and the primary downstream end.

In a further exemplary aspect, the primary valve can be a gate valve, and the primary valve member can be a primary gate. In a further exemplary aspect, the bypass valve body can be positioned between a bypass upstream end seamlessly connected to the primary upstream end and a bypass downstream end seamlessly connected to the primary downstream end. In a further exemplary aspect, the valve body can be comprised of a monolithic casting formed from a single material. In a further exemplary aspect, the bypass can be disposed external to the primary valve body portion, and the bypass external surface seamlessly can intersect the primary external surface at the primary upstream end and the primary downstream end.

In another exemplary aspect, a method for forming a valve body can comprise pouring a molten metal into a valve body mold cavity of a mold; forming a seamless bypass on a valve body within the mold; and removing the bypass valve body from the mold. In a further exemplary aspect, the method can further comprise forming the mold prior to pouring the molten metal into the mold by alternately depositing a substantially planar layer of sand, and selectively spraying a binder on the layer of sand. In a further exemplary aspect, selectively spraying the binder can comprise spraying the binder on the layer of sand corresponding to a cross-section of the mold for a first mold height. In a further exemplary aspect, spraying the binder on the layer of sand can cement together a portion of the sand. In a further exemplary aspect, the bypass can be disposed external to a primary valve body portion of the valve body. In a further exemplary aspect, the method can comprise forming the mold prior to pouring the molten metal into the mold by using an additive manufacturing process. In a further exemplary aspect, the valve body can be cast in a single operation.

In another exemplary aspect, a valve body with an integral bypass can comprise a primary valve body portion defining a primary bore, the primary valve body portion configured to house a valve member in the primary bore; and the bypass seamlessly integrated with the primary valve body portion, the bypass defining a bypass bore, the bypass bore comprising a bypass upstream bore and a bypass downstream bore.

One should note that conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more particular embodiments or that one or more particular embodiments necessarily include logic for deciding, with or without user input or prompting, whether these features, elements and/or steps are included or are to be performed in any particular embodiment.

It should be emphasized that the above-described embodiments are merely possible examples of implementations, merely set forth for a clear understanding of the principles of the present disclosure. Any process descriptions or blocks in flow diagrams should be understood as representing modules, segments, or portions of code which include one or more executable instructions for implementing specific logical functions or steps in the process, and alternate implementations are included in which functions may not be included or executed at all, may be executed out of order from that shown or discussed, including substantially concurrently or in reverse order, depending on the functionality involved, as would be understood by those reasonably skilled in the art of the present disclosure.

## Claims

1. A valve body (200) with an integral bypass (250), the valve body comprising:
a primary valve body portion (202) comprising a flange (219) disposed at one of a primary upstream end (218a) or a primary downstream end (218b) of the primary valve body portion, the flange defining a plurality of fastener holes for mechanically connecting the flange to a complimentary flange of a piping system, wherein the flange defines a flange face surface (226) that extends between an inner circumferential surface and an outer circumferential surface of the flange, wherein the flange is substantially annular to a primary bore (208) of the valve body;
**characterized in that** the valve body further comprises
an identification tab (222), the identification tab being disposed on the outer circumferential surface of the flange, the identification tab extending radially outwards from the flange, wherein the identification tab defines an indicia surface (227), the indicia surface comprising indicia (1101),
wherein the flange face surface is parallel to, or substantially coplanar with, the indicia surface, and
wherein the valve body is comprised of a monolithic casting formed from a single material.

2. The valve body according to claim 1, wherein the indicia are raised from, or recessed into, the indicia surface of the identification tab.

3. The valve body according to claim 2, wherein the indicia raised from, or recessed into, the indicia surface comprises the indicia engraved into, or stamped into, the indicia surface.

4. The valve body according to claim 1, wherein the indicia comprise a sticker, or label, mounted on the indicia surface.

5. The valve body according to any of claims 1 to 4, wherein the identification tab defines various indicia.

6. The valve body according to any of claims 1 to 5, wherein the flange is one of: a flat-face flange, a raised face flange, a tongue-and-groove flange, a ring-type joint flange.

7. The valve body according to any of claims 1 to 6, wherein the primary valve body portion comprises two flanges including an upstream flange (219a) disposed at the primary upstream end of the primary valve body portion and a downstream flange (219b) disposed at the primary downstream end of the primary valve body portion, each flange defining:
a plurality of fastener holes for mechanically connecting the flange to a complimentary flange of a piping system, wherein the flange defines a flange face surface that extends between an inner circumferential surface and an outer circumferential surface of the flange, wherein the flange is substantially annular to a primary bore of the valve body, and
an identification tab disposed on the outer circumferential surface of the flange, the identification tab extending radially outwards from the flange, wherein the identification tab defines an indicia surface, the indicia surface comprising indicia.

8. The valve body according to any of claims 1 to 7, wherein the bypass is integrated with the primary valve body portion.

9. The valve body according to claim 8, wherein the bypass seamlessly integrates with the primary valve body portion.

10. The valve body according to claim 9, wherein the primary valve body portion defines a primary internal surface (206) and a primary external surface (204), the primary internal surface defining a primary bore extending through the primary valve body portion from the primary upstream end (218a) to the primary downstream end (218b), the primary bore comprising a primary upstream bore (212a) extending through the primary upstream end and a primary downstream bore (212b) extending through the primary downstream end, the primary valve body portion configured to house a valve member between the primary upstream bore and the primary downstream bore.

11. The valve body according to claim 10, wherein the bypass defines a bypass external surface (258) and a bypass internal surface (258), the bypass internal surface (458) defining a bypass bore (408), the bypass bore comprising a bypass upstream bore and a bypass downstream bore, the bypass upstream bore extending through the primary upstream end of the primary valve body portion from the primary external surface to the primary internal surface of the primary upstream bore, the bypass downstream bore extending through the primary downstream end of the primary valve body portion from the primary external surface to the primary internal surface of the primary downstream bore, the bypass internal surface seamlessly intersecting the primary internal surface at the primary upstream end and the primary downstream end.

12. The valve body according to claim 11, wherein the bypass is disposed externally to the primary valve body portion, and the bypass external surface seamlessly intersects the primary external surface at the primary upstream end and the primary downstream end.

## Patentansprüche

1. Ventilkörper (200) mit einer integrierten Umgehung (250), der Ventilkörper umfassend:
einen primären Ventilkörperabschnitt (202) umfassend einen Flansch (219), der an entweder einem primären stromaufwärtigen Ende (218a) oder einem primären nachgelagerten Ende (218b) des primären Ventilkörperabschnitts angeordnet ist, wobei der Flansch eine Vielzahl von Befestigungslöchern zur mechanischen Verbindung des Flansches mit einem passenden Flansch eines Rohrleitungssystems aufweist, wobei der Flansch eine Flanschfläche (226) definiert, die sich zwischen einer inneren Umfangsfläche und einer äußeren Umfangsfläche des Flansches erstreckt, wobei der Flansch im Wesentlichen ringförmig zu einer primären Bohrung (208) des Ventilkörpers angeordnet ist;
**dadurch gekennzeichnet, dass** der Ventilkörper ferner Folgendes umfasst
eine Kennzeichnungslasche (222), wobei die Kennzeichnungslasche an der äußeren Umfangsfläche des Flansches angeordnet ist und sich radial nach außen vom Flansch erstreckt, wobei die Kennzeichnungslasche eine Markierungsfläche (227) definiert, die Markierungsfläche umfassend eine Markierung (1101),
wobei die Flanschfläche parallel zur Markierungsfläche verläuft oder im Wesentlichen koplanar zu dieser ist, und wobei der Ventilkörper einen monolithischen Guss aus einem einzigen Material umfasst.

2. Ventilkörper nach Anspruch 1, wobei die Markierungen aus der Markierungsfläche der Kennzeichnungslasche hervorstehen oder in diese vertieft sind.

3. Ventilkörper nach Anspruch 2, wobei die aus der Markierungsfläche hervorstehenden oder in diese vertieften Markierungen die in die Markierungsfläche eingravierten oder eingeprägten Markierungen umfassen.

4. Ventilkörper nach Anspruch 1, wobei die Markierungen einen Aufkleber oder ein Etikett umfassen, das auf der Markierungsfläche angebracht ist.

5. Ventilkörper nach einem der Ansprüche 1 bis 4, wobei die Kennzeichnungslasche verschiedene Markierungen definiert.

6. Ventilkörper nach einem der Ansprüche 1 bis 5, wobei es sich bei dem Flansch um einen der folgenden Flanschtypen handelt: einen Flachflansch, einen Flansch mit erhöhter Dichtleiste, einen Nut- und Federflansch oder einen ringförmigen Verbindungsflansch.

7. Ventilkörper nach einem der Ansprüche 1 bis 6, wobei der primäre Ventilkörperabschnitt zwei Flansche umfasst, darunter einen stromaufwärtigen Flansch (219a), der am primären stromaufwärtigen Ende des primären Ventilkörperabschnitts angeordnet ist, und einen stromabwärtigen Flansch (219b), der am primären stromabwärtigen Ende des primären Ventilkörperabschnitts angeordnet ist, wobei jeder Flansch Folgendes definiert:
eine Vielzahl von Befestigungslöchern zum mechanischen Verbinden des Flansches mit einem passenden Flansch eines Rohrleitungssystems, wobei der Flansch eine Flanschfläche definiert, die sich zwischen einer inneren Umfangsfläche und einer äußeren Umfangsfläche des Flansches erstreckt, wobei der Flansch im Wesentlichen ringförmig zu einer primären Bohrung des Ventilkörpers angeordnet ist, und
eine Kennzeichnungslasche, die an der äußeren Umfangsfläche des Flansches angeordnet ist und sich radial nach außen vom Flansch erstreckt, wobei die Kennzeichnungslasche eine Markierungsfläche definiert, die Markierungsfläche umfassend eine Markierung.

8. Ventilkörper nach einem der Ansprüche 1 bis 7, wobei die Umgehung in den primären Ventilkörperabschnitt integriert ist.

9. Ventilkörper nach Anspruch 8, wobei die Umgehung nahtlos in den primären Ventilkörperabschnitt übergeht.

10. Ventilkörper nach Anspruch 9, wobei der primäre Ventilkörperabschnitt eine primäre Innenfläche (206) und eine primäre Außenfläche (204) definiert, wobei die primäre Innenfläche eine primäre Bohrung definiert, die sich durch den primären Ventilkörperabschnitt vom primären stromaufwärtigen Ende (218a) zum primären nachgelagerten Ende (218b) erstreckt, die primäre Bohrung umfassend eine primäre stromaufwärtige Bohrung (212a), die sich durch das primäre stromaufwärtige Ende erstreckt, und eine primäre nachgelagerte Bohrung (212b), die sich durch das primäre nachgelagerte Ende erstreckt, wobei der primäre Ventilkörperabschnitt konfiguriert ist, um ein Ventilelement zwischen der primären stromaufwärtigen Bohrung und der primären nachgelagerten Bohrung aufzunehmen.

11. Ventilkörper nach Anspruch 10, wobei die Umgehung eine äußere Umgehungsfläche (258) und eine innere Umgehungsfläche (258) definiert, wobei die innere Umgehungsfläche (458) eine Umgehungsbohrung (408) definiert, die Umgehungsbohrung umfassend eine stromaufwärtige Umgehungsbohrung und eine nachgelagerte Umgehungsbohrung, wobei sich die stromaufwärtige Umgehungsbohrung durch das primäre stromaufwärtige Ende des primären Ventilkörperabschnitts von der primären Außenfläche zur primären Innenfläche der primären stromaufwärtigen Bohrung erstreckt, sich die nachgelagerte Umgehungsbohrung durch das primäre nachgelagerte Ende des primären Ventilkörperabschnitts von der primären Außenfläche zur primären Innenfläche der primären nachgelagerten Bohrung erstreckt und die innere Umgehungsfläche die primäre Innenfläche am primären stromaufwärtigen Ende und am primären nachgelagerten Ende nahtlos schneidet.

12. Ventilkörper nach Anspruch 11, wobei die Umgehung außerhalb des primären Ventilkörperabschnitts angeordnet ist und die äußere Umgehungsfläche am primären stromaufwärtigen Ende sowie am primären nachgelagerten Ende nahtlos in die primäre Außenfläche übergeht.

## Revendications

1. Corps de vanne (200) avec une dérivation intégrée (250), le corps de vanne comprenant:
une partie de corps de vanne principale (202) comprenant une bride (219) disposée au niveau de l'une parmi une extrémité en amont principale (218a) et une extrémité en aval principale (218b) de la partie de corps de vanne principale, la bride définissant une pluralité de trous de fixation permettant de relier mécaniquement la bride à une bride complémentaire d'un système de tuyauterie, dans lequel la bride définit une surface frontale de bride (226) qui s'étend entre une surface circonférentielle interne et une surface circonférentielle externe de la bride, dans lequel la bride est sensiblement annulaire par rapport à un alésage principal (208) du corps de vanne;
**caractérisé en ce que** le corps de vanne comprend en outre une languette d'identification (222), la languette d'identification étant disposée sur la surface circonférentielle externe de la bride, la languette d'identification s'étendant radialement vers l'extérieur à partir de la bride, dans lequel la languette d'identification définit une surface de marquage (227), la surface de marquage comprenant des marquages (1101), dans lequel la surface frontale de bride est parallèle à la surface de marquage, ou sensiblement coplanaire avec celle-ci, et
dans lequel le corps de vanne est constitué d'un moulage monolithique formé à partir d'un seul matériau.

2. Corps de vanne selon la revendication 1, dans lequel les marquages sont en relief ou en creux par rapport à la surface de marquage de la languette d'identification.

3. Corps de vanne selon la revendication 2, dans lequel les marquages en relief ou en creux par rapport à la surface de marquage comprennent les marquages gravés ou estampés dans la surface de marquage.

4. Corps de vanne selon la revendication 1, dans lequel les marquages comprennent un autocollant ou une étiquette apposé(e) sur la surface de marquage.

5. Corps de vanne selon l'une quelconque des revendications 1 à 4, dans lequel la languette d'identification définit divers marquages.

6. Corps de vanne selon l'une quelconque des revendications 1 à 5, dans lequel la bride est l'une parmi: une bride à face plane, une bride à face surélevée, une bride à rainure et languette, une bride à joint annulaire.

7. Corps de vanne selon l'une quelconque des revendications 1 à 6, dans lequel la partie de corps de vanne principale comprend deux brides comportant une bride en amont (219a) disposée au niveau de l'extrémité en amont principale de la partie de corps de vanne principale et une bride en aval (219b) disposée au niveau de l'extrémité en aval principale de la partie de corps de vanne principale, chaque bride définissant:
une pluralité de trous de fixation permettant de relier mécaniquement la bride à une bride complémentaire d'un système de tuyauterie, dans lequel la bride définit une surface frontale de bride qui s'étend entre une surface circonférentielle interne et une surface circonférentielle externe de la bride, dans lequel la bride est sensiblement annulaire par rapport à un alésage principal du corps de vanne, et
une languette d'identification disposée sur la surface circonférentielle externe de la bride, la languette d'identification s'étendant radialement vers l'extérieur à partir de la bride, dans lequel la languette d'identification définit une surface de marquage, la surface de marquage comprenant des marquages.

8. Corps de vanne selon l'une quelconque des revendications 1 à 7, dans lequel la dérivation est intégrée à la partie de corps de vanne principale.

9. Corps de vanne selon la revendication 8, dans lequel la dérivation s'intègre parfaitement à la partie de corps de vanne principale.

10. Corps de vanne selon la revendication 9, dans lequel la partie de corps de vanne principale définit une surface interne principale (206) et une surface externe principale (204), la surface interne principale définissant un alésage principal s'étendant à travers la partie de corps de vanne principale depuis l'extrémité en amont principale (218a) jusqu'à l'extrémité en aval principale (218b), l'alésage principal comprenant un alésage en amont principal (212a) s'étendant à travers l'extrémité en amont principale et un alésage en aval principal (212b) s'étendant à travers l'extrémité en aval principale, la partie de corps de vanne principale étant conçue pour loger un élément de vanne entre l'alésage en amont principal et l'alésage en aval principal.

11. Corps de vanne selon la revendication 10, dans lequel la dérivation définit une surface externe de dérivation (258) et une surface interne de dérivation (258), la surface interne de dérivation (458) définissant un alésage de dérivation (408), l'alésage de dérivation comprenant un alésage en amont de dérivation et un alésage en aval de dérivation, l'alésage en amont de dérivation s'étendant à travers l'extrémité en amont principale de la partie de corps de vanne principale depuis la surface externe principale jusqu'à la surface interne principale de l'alésage en amont principal, l'alésage en aval de dérivation s'étendant à travers l'extrémité en aval principale de la partie de corps de vanne principale depuis la surface externe principale jusqu'à la surface interne principale de l'alésage en aval principal, la surface interne de dérivation croisant parfaitement la surface interne principale au niveau de l'extrémité en amont principale et au niveau de l'extrémité en aval principale.

12. Corps de vanne selon la revendication 11, dans lequel la dérivation est disposée à l'extérieur de la partie de corps de vanne principale, et la surface externe de dérivation croise parfaitement la surface externe principale au niveau de l'extrémité en amont principale et de l'extrémité en aval principale.
